# FASCICULE DE BREVET EUROPEEN

(11) **EP 3 596 739 B1**
(45) Date de publication et mention de la délivrance du brevet: **22.05.2024**
(21) Numéro de dépôt: 18715208.7
(22) Date de dépôt: 16.03.2018
(51) Int. Cl.: C08K 3/38, H01B 3/44, H01B 3/22, C08K 3/26

(54) **CÂBLE ÉLECTRIQUE PRÉSENTANT UNE CONDUCTIVITÉ THERMIQUE AMÉLIORÉE**
ELEKTRISCHES KABEL MIT VERBESSERTER THERMISCHER LEITFÄHIGKEIT
ELECTRIC CABLE WITH IMPROVED THERMAL CONDUCTIVITY

(30) Priorité: 17.03.2017 FR 1752201
(43) Date de publication de la demande: 22.01.2020
(60) Demande divisionnaire: 24165308.8
(73) Titulaire: Nexans, 92400 Courbevoie (FR)
(72) Inventeur: PEREGO, Gabriele, 20144 Milan (IT); MAZEL, Christelle, 38300 Ruy (FR); CHARRIER, Dimitri, 69130 Ecully (FR); MERLE, Daphné, 69003 Lyon (FR)
(74) Mandataire: Ipsilon
(86) Numéro de dépôt international: PCT/FR2018/050648
(87) Numéro de publication internationale: WO 2018/167442

(56) Documents cités:
- EP-A1- 0 110 677
- EP-B1- 3 695 424
- WO-A1-2014/029447
- US-A- 4 348 459
- US-A- 4 806 424
- US-A1- 2013 025 909
- US-A1- 2013 233 604
- US-A1- 2015 228 376

## Description

L'invention concerne un câble comprenant au moins une couche électriquement isolante obtenue à partir d'une composition polymère comprenant au moins un matériau polymère thermoplastique à base de polypropylène et au moins une charge inorganique choisie parmi les silicates, le nitrure de bore, les carbonates et un de leurs mélanges, et un procédé de préparation dudit câble.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

L'invention s'applique en particulier aux câbles électriques présentant une conductivité thermique améliorée.

Un câble de transport d'énergie à moyenne ou à haute tension comprend de préférence, de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ;
- éventuellement un écran électrique entourant ladite couche semi-conductrice externe, et
- éventuellement une gaine de protection électriquement isolante entourant ledit écran électrique.

En particulier, la couche électriquement isolante peut être une couche polymère à base d'une polyoléfine réticulée telle qu'un polyéthylène réticulé (XLPE) ou un élastomère réticulé d'éthylène-propylène ou d'éthylène-propylène-diène (EPDM). La réticulation est généralement effectuée lors de l'étape d'extrusion de la composition polymère autour de l'élément électriquement conducteur allongé. L'utilisation d'une polyoléfine réticulée permet de fournir une couche présentant des propriétés électriques et mécaniques améliorées par rapport au LDPE non réticulé, en particulier, les câbles comportant des couches isolantes à base de XLPE peuvent être utilisés jusqu'à des températures de 90°C alors que les câbles comportant une couche isolante à base de LDPE ne sont utilisables qu'à des températures inférieures, ne dépassant pas 70°C. Cependant, les XLPE présentent un certain nombre d'inconvénients. D'une part, ces polymères ne sont pas facilement recyclables. D'autre part, le processus de réticulation (vulcanisation) pour produire une couche homogène requiert des conditions de réaction spécifiques (e.g. en termes de durée et de température) qui réduisent la vitesse de fabrication du câble et augmentent son coût de production. En effet, pour obtenir un taux de réticulation satisfaisant, il faut que le polymère puisse être porté à la température requise pour obtenir sa réticulation pendant une durée suffisamment longue. Ainsi, la vitesse de production des câbles comportant une couche électriquement isolante à base de XLPE doit être ajustée de manière à ce que le temps de passage dans le tunnel de réticulation soit assez long pour obtenir un taux de réticulation satisfaisant, ce qui représente une limite contraignante non négligeable en termes de capacité de production. Enfin, la réticulation peut parfois débuter de façon prématurée dans l'extrudeuse (vis, collier) et/ou la tête d'extrudeuse, induisant une formation de particules de XLPE dégradé dans l'extrudeuse (également appelé « scorch »), qui peuvent ensuite migrer dans la couche électriquement isolante ou dans la couche semi-conductrice du câble et y créer des défauts. La présence de particules de XLPE dégradé affecte alors les propriétés finales du câble dans la mesure où ces particules génèrent un manque d'homogénéité, principalement du matériau de la couche électriquement isolante ou bien à l'interface entre la couche électriquement isolante et les couche semi-conductrices. Ce phénomène est connu sous la dénomination anglaise « *scorch phenomena* » pour phénomène de grillage.

L'utilisation de matériaux à base de LDPE pour les couches électriquement isolantes de câbles est donc en principe une alternative à l'utilisation de matériaux à base de XLPE. Cependant, les matériaux à base de LDPE présentent l'inconvénient de ne pas pouvoir être utilisés à des températures supérieures à 70°C, ce qui a également pour conséquence de réduire leur capacité à transporter de l'énergie de façon à éviter toute surchauffe de la couche électriquement isolante à des températures supérieures à 70°C.

Les matériaux à base de polypropylène présentent par ailleurs de bonnes propriétés diélectriques qui sont par exemple mises à profit dans les transformateurs et dans les câbles, en particulier les câbles sous-marins comportant une couche électriquement isolante à base de polypropylène laminé sur du papier (câbles PPLP, de la dénomination anglophone « *paper laminated polypropylène* »).

Par contre, dans le domaine des câbles moyenne tension (MV) et haute tension (HV), l'utilisation du polypropylène comme matériau de la couche électriquement isolante n'est encore pas très répandue.

Le polypropylène est généralement caractérisé par une densité plus faible que celle du polyéthylène, cette plus faible densité étant associée à des propriétés de conductivité thermiques légèrement inférieures à celles du polyéthylène. Par conséquent, cela représente un inconvénient lorsque les câbles d'énergie sont des câbles MV et HV dans la mesure où cela diminue l'évacuation de la chaleur générée par l'effet Joule, et ainsi la quantité d'énergie transportée, celle-ci étant fonction de la température maximale acceptable de l'élément électriquement conducteur allongé.

La demande US 2015/228376 A1 décrit un câble électrique comprenant un élément électriquement conducteur allongé et une couche électriquement isolante réticulée obtenue à partir d'une composition polymère comprenant un matériau polymère thermoplastique à base de polypropylène et une charge inorganique, caractérisé en ce que la charge inorganique est choisie parmi les silicates, le nitrure de bore et les carbonates.

Les demandes WO 2014/029447 A1 et US 4 806 424 A décrivent un câble électrique comprenant un élément électriquement conducteur allongé et une couche électriquement isolante obtenue à partir d'une composition polymère comprenant un matériau polymère et des silicates d'aluminium comme charge inorganique.

La demande US 4 348 459 A décrit un câble électrique comprenant un élément électriquement conducteur allongé et une couche électriquement isolante obtenue à partir d'une composition d'élastomères thermoplastiques comprenant un caoutchouc EPDM, un polymère de propylène et le carbonate de calcium en tant que charge inorganique.

La demande EP 0 110 677 A1 décrit un câble électrique comprenant un élément électriquement conducteur et une couche électriquement isolante non réticulée obtenue à partir d'une composition d'élastomères thermoplastiques comprenant un polymère de propylène et une charge inorganique, caractérisé en ce que la charge inorganique est choisie parmi les silicates et les carbonates.

La demande US 2013/233604 A1 décrit un câble électrique comprenant un élément électriquement conducteur allongé et une couche électriquement isolante obtenue à partir d'une composition polymère comprenant un polymère de propylène hétérophasé.

Par ailleurs, la demande internationale WO 2015/089179 A1 décrit une composition pour un câble électrique présentant une conductivité thermique d'au moins 0,30 W/mK environ. La composition comprend 100 parties en poids d'une polyoléfine (e.g. copolymère d'éthylène-butène), de 10 à 70 parties en poids d'un agent retardateur de flamme halogéné (éthylène bistétrabromophthalimide), de 100 à 200 parties en poids d'un agent retardateur de flamme non halogéné (oxyde et/ou hydroxyde de métal) et de 5 à 35 parties en poids d'un agent retardant de flamme de synergie (trioxyde d'antimoine). Toutefois, les propriétés électriques et mécaniques de la composition ne sont pas optimisées pour une application dans le domaine des câbles HV et MV.

Il existe donc toujours un besoin en câbles électriques comprenant une couche électriquement isolante présentant des propriétés électriques comparables à celles obtenues avec une couche réticulée XLPE, notamment en termes de conductivité thermique, tout en garantissant de bonnes propriétés mécaniques.

Ainsi, le but de la présente invention est de pallier les inconvénients de l'art antérieur et de fournir un câble économique, en particulier à moyenne ou à haute tension, comprenant des matériaux recyclables, pouvant fonctionner à des températures supérieures à 70°C, et présentant une conductivité thermique améliorée, tout en garantissant de bonnes propriétés mécaniques, notamment en termes d'allongement et de force à la rupture.

Le but est atteint par l'invention qui va être décrite ci-après.

L'invention a pour premier objet un câble électrique comprenant au moins un élément électriquement conducteur allongé et au moins une couche électriquement isolante obtenue à partir d'une composition polymère comprenant au moins un matériau polymère thermoplastique à base de polypropylène et au moins une charge inorganique, caractérisé en ce que la charge inorganique est choisie parmi les carbonates et en ce que le matériau polymère thermoplastique à base de polypropylène comprend un copolymère de propylène hétérophasé en tant que copolymère de propylène P₁.

La combinaison d'un matériau polymère thermoplastique à base de polypropylène avec une charge inorganique choisie parmi les carbonates permet d'obtenir une couche électriquement isolante ayant une conductivité thermique améliorée, tout en garantissant de bonnes propriétés mécaniques, notamment en termes d'allongement et de force à la rupture.

Parmi les carbonates à titre de charge inorganique, on peut citer la craie, le carbonate de calcium (e.g. aragonite, vatérite, calcite ou un mélange d'au moins deux des composés précités), le carbonate de magnésium, le calcaire, ou tout autre minéral comprenant majoritairement du carbonate de calcium ou du carbonate de magnésium.

Dans la présente invention, l'expression « tout autre minéral comprenant majoritairement du carbonate de calcium ou du carbonate de magnésium » signifie tout autre minéral comprenant au moins 50% en masse environ, de préférence au moins 60% en masse environ, et de préférence encore au moins 70% en masse environ, de carbonate de calcium ou de carbonate de magnésium, par rapport à la masse totale du minéral.

La craie et le carbonate de calcium sont préférés.

Selon une forme de réalisation particulièrement préférée de l'invention, la charge inorganique est de la craie.

La charge inorganique représente de préférence de 1% à 50% en masse environ, de préférence encore de 2% à 40% en masse environ, et de préférence encore de 5% à 30% en masse environ, par rapport à la masse totale de la composition polymère.

Le matériau polymère thermoplastique à base de polypropylène comprend un copolymère de propylène P₁.

À titre d'exemples de copolymères de propylène P₁, on peut citer les copolymères de propylène et d'oléfine, l'oléfine étant notamment choisie parmi l'éthylène et une oléfine α₁ différente du propylène.

L'éthylène ou l'oléfine α₁ différente du propylène du copolymère de propylène et d'oléfine représente de préférence au plus 15% en mole environ, et de préférence encore au plus 10% en mole environ, par rapport au nombre de moles total de copolymère de propylène et d'oléfine.

L'oléfine α₁ différente du propylène peut répondre à la formule CH₂=CH-R¹, dans laquelle R¹ est un groupe alkyle linéaire ou ramifié ayant de 2 à 12 atomes de carbone, notamment choisie parmi les oléfines suivantes : 1-butène, 1-pentène ; 4-méthyl-1-pentène, 1-hexène, 1-octène, 1-décène, 1-dodécène, et un de leurs mélanges.

Les copolymères de propylène et d'éthylène sont préférés à titre de copolymère de propylène P₁.

Le copolymère de propylène P₁ comprend copolymère de propylène hétérophasé.

Le matériau polymère thermoplastique à base de polypropylène peut comprendre plusieurs copolymères de propylène P₁ différents, notamment deux copolymères de propylène P₁ différents, lesdits copolymères de propylène P₁ étant tels que définis ci-dessus.

En particulier, le matériau polymère thermoplastique à base de polypropylène peut comprendre un copolymère statistique de propylène (en tant que premier copolymère de propylène P₁) et un copolymère de propylène hétérophasé (en tant que deuxième copolymère de propylène P₁). Cette combinaison de copolymères de propylène P₁ permet d'améliorer les propriétés mécaniques de la couche réticulée.

Dans l'invention, le copolymère statistique de propylène P₁ a de préférence un module élastique allant de 600 à 1200 MPa environ.

À titre d'exemple de copolymère statistique de propylène, on peut citer celui commercialisé par la société Borealis sous la référence Bormed^{®} RB 845 MO.

Le copolymère hétérophasé de propylène P₁ a de préférence un module élastique allant de 50 à 250 MPa environ.

Le copolymère hétérophasé peut comprendre une phase thermoplastique de type propylène et une phase élastomère thermoplastique de type copolymère d'éthylène et d'une oléfine α₂.

L'oléfine α₂ de la phase élastomère thermoplastique du copolymère hétérophasé peut être le propylène.

La phase élastomère thermoplastique du copolymère hétérophasé peut représenter au moins 20% en masse environ, et de préférence au moins 45% en masse environ, par rapport à la masse totale du copolymère hétérophasé.

À titre d'exemple de copolymère hétérophasé, on peut mentionner le copolymère hétérophasé commercialisé par la société Basell Polyolefins sous la référence Adflex^{®} Q 200 F.

Le copolymère de propylène P₁ peut avoir une température de fusion supérieure à 130°C environ, de préférence supérieure à 140°C environ, et de préférence encore allant de 140 à 170°C environ.

Le copolymère de propylène P₁ peut avoir une enthalpie de fusion allant de 20 à 100 J/g environ.

Le copolymère statistique de propylène P₁ peut avoir une enthalpie de fusion allant de 40 à 80 J/g environ.

Le copolymère hétérophasé de propylène P₁ peut avoir une enthalpie de fusion allant de 20 à 50 J/g environ.

Le copolymère de propylène P₁ peut avoir un indice de fluidité allant de 0,5 à 3 g/10 min, mesuré à 230°C environ avec une charge de 2,16 kg environ selon la norme ASTM D1238-00.

Le copolymère statistique de propylène P₁ peut avoir un indice de fluidité allant de 1,2 à 2,5 g/10 min, mesuré à 230°C environ avec une charge de 2,16 kg environ selon la norme ASTM D1238-00.

Le copolymère hétérophasé de propylène P₁ peut avoir un indice de fluidité allant de 0,5 à 1,5 g/10 min, mesuré à 230°C environ avec une charge de 2,16 kg environ selon la norme ASTM D1238-00.

Selon une forme de réalisation préférée de l'invention, le copolymère de propylène P₁ ou les copolymères de propylène P₁ lorsqu'il y en plusieurs, représente(nt) au moins 50% en masse environ, de préférence de 55 à 90% en masse environ, et de préférence encore de 60 à 90% en masse environ, par rapport à la masse totale du matériau polymère thermoplastique à base de polypropylène.

Le copolymère statistique de propylène peut représenter au moins 20% en masse, et de préférence de 30 à 70% en masse, par rapport à la masse totale du matériau polymère thermoplastique à base de polypropylène.

Le copolymère hétérophasé de propylène P₁ peut représenter au moins 1% en masse, et de préférence de 2 à 40% en masse, par rapport à la masse totale du matériau polymère thermoplastique à base de polypropylène.

Le matériau polymère thermoplastique à base de polypropylène peut comprendre en outre un homopolymère ou un copolymère d'oléfine P₂, l'oléfine étant notamment choisie parmi l'éthylène et une oléfine α₃.

La combinaison de polymères P₁ et P₂ permet d'obtenir un matériau polymère thermoplastique présentant de bonnes propriétés mécaniques, notamment en termes de module élastique, et électriques.

L'oléfine α₃ de l'homopolymère ou du copolymère d'oléfine P₂ peut répondre à la formule CH₂= CH-R², dans laquelle R² est un groupe alkyle linéaire ou ramifié ayant de 1 à 12 atomes de carbone, notamment choisie parmi les oléfines suivantes : propylène, 1-butène, isobutylène, 1-pentène, 4-méthyl-1-pentène, 1-hexène, 1-octène, 1-décène, 1-dodécène, et un de leurs mélanges.

L'oléfine α₃ propylène, 1-hexène ou 1-octène est particulièrement préférée.

L'homopolymère ou le copolymère d'oléfine P₂ peut être un polyéthylène.

Le polyéthylène peut être un polyéthylène basse densité, et de préférence un polyéthylène linéaire basse densité, notamment selon la norme ISO 1183A (à une température de 23°C). Dans la présente invention, l'expression « polyéthylène linéaire basse densité » signifie un polyéthylène linéaire ayant une densité allant de 0,91 à 0,925 environ, ladite densité étant mesurée selon la norme ISO 1183A (à une température de 23°C).

Selon une forme de réalisation préférée de l'invention, l'homopolymère ou copolymère d'oléfine P₂ représente de 10 à 50% en masse environ, et de préférence encore de 10 à 40% en masse environ, par rapport à la masse totale du matériau polymère thermoplastique à base de polypropylène.

Selon une forme de réalisation particulièrement préférée de l'invention, le matériau polymère thermoplastique à base de polypropylène comprend deux copolymères de propylène P₁ tels qu'un copolymère statistique de propylène et un copolymère de propylène hétérophasé, et un homopolymère ou copolymère d'oléfine P₂ tel qu'un polyéthylène. Cette combinaison de copolymères de propylène P₁ et d'un homopolymère ou copolymère d'oléfine P₂ permet d'améliorer encore les propriétés mécaniques de la couche réticulée, tout en garantissant une bonne conductivité thermique.

Le matériau polymère thermoplastique de la composition polymère de la couche électriquement isolante du câble de l'invention est hétérophasé (i.e. il comprend plusieurs phases). La présence de plusieurs phases provient généralement du mélange de deux polyoléfines différentes, tel qu'un mélange de polypropylène et d'un copolymère de propylène ou de polyéthylène.

La composition polymère de l'invention peut comprendre en outre un liquide diélectrique, notamment formant un mélange intime avec le matériau polymère thermoplastique.

À titre d'exemples de liquide diélectrique, on peut citer les huiles minérales (e.g. huiles naphténiques, huiles paraffiniques ou huiles aromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.

Selon un mode de réalisation particulier, le liquide diélectrique représente de 1% à 20% en masse environ, de préférence de 2 à 15% en masse environ, et de préférence encore de 3 à 12% en masse environ, par rapport à la masse totale du matériau polymère thermoplastique.

Le liquide diélectrique peut comprendre une huile minérale et au moins un composé polaire de type benzophénone, acétophénone ou un de leurs dérivés.

Dans ce mode de réalisation, le liquide diélectrique peut comprendre au moins 70% en masse environ d'huile minérale, et de préférence au moins 80% en masse environ d'huile minérale, par rapport à la masse totale du liquide diélectrique.

L'huile minérale est généralement liquide à 20-25°C environ.

L'huile minérale peut être choisie parmi les huiles naphténiques et les huiles paraffiniques.

L'huile minérale est obtenue à partir du raffinage d'un brut pétrolier.

Selon une forme de réalisation particulièrement préférée de l'invention, l'huile minérale comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

Dans un mode de réalisation particulier, le composé polaire de type benzophénone, acétophénone ou un de leurs dérivés représente au moins 2,5% en masse environ, de préférence au moins 3,5% en masse environ, et encore plus préférentiellement au moins 4% en masse environ, par rapport à la masse totale du liquide diélectrique.

Selon une forme de réalisation préférée de l'invention, le composé polaire de type benzophénone, acétophénone ou un de leurs dérivés est choisi parmi la benzophénone, la dibenzosubérone, la fluorénone et l'anthrone. La benzophénone est particulièrement préférée.

Le matériau polymère thermoplastique peut comprendre en outre un ou plusieurs additifs.

Les additifs sont bien connus de l'homme du métier et peuvent être choisis parmi des antioxydants, des agents anti-UV, des agents anti-cuivre, des agents anti-arborescences d'eau, des pigments, et un de leurs mélanges.

Le matériau polymère thermoplastique peut typiquement comprendre de 0,01 à 5% en masse environ, et de préférence de 0,1 à 2% en masse environ d'additifs, par rapport à la masse totale du matériau polymère thermoplastique.

Plus particulièrement, les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le Pentaérythritol tétrakis(3-(3,5-di-*tert*-butyl-4-hydroxyphényl)propionate) (Irganox^{®} 1010), l'octadécyl 3-(3,5-di-*tert*-butyl-4-hydroxyphényl)propionate (Irganox^{®} 1076), le 1,3,5-triméthyl-2,4,6-tris(3,5-di-*tert*-butyl-4-hydroxybenzyl)benzène (Irganox^{®} 1330), le 4,6-bis (octylthiométhyl)-o-crésol (Irgastab^{®} KV10), le 2,2'-thiobis(6-*tert*-butyl-4-méthylphénol) (Irganox^{®} 1081), le 2,2'- thiodiéthylène bis[3-(3,5-di-*tert*-butyl-4-hydroxyphényl) propionate] (Irganox^{®} 1035), le 2,2'-méthylènebis(6-*tert*-butyl-4-méthylphénol), le 1,2-bis(3,5-di-tert-butyl-4-hydroxyhydrocinnamoyl) hydrazine (Irganox^{®} MD 1024), ou le 2,2'-oxamido-bis(éthyl-3(3,5-di-*tert-*butyl-4-hydroxyphényle)propionate).

À titre d'exemples de thioesters, on peut citer le didodécyl-3,3'-thiodipropionate (Irganox^{®} PS800), le distéaryl thiodipropionate (Irganox^{®} PS802) ou le 4,6-bis(octylthiométhyle)-o-crésol (Irganox^{®} 1520).

À titre d'exemples d'antioxydants à base de soufre, on peut citer le dioctadecyl-3,3'-thiodipropionate ou le didodecyl-3,3'-thiodipropionate.

À titre d'exemples d'antioxydants à base de phosphore, on peut citer le tris(2,4-di-*tert*-butyl-phényle)phosphite (Irgafos^{®} 168) ou le bis(2,4-di-*tert-*butylphényl)pentaérythritol diphosphite (Ultranox^{®} 626).

À titre d'exemples d'antioxydants de type amine, on peut citer les phénylène diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

La composition polymère de la couche électriquement isolante de l'invention est une composition polymère thermoplastique. Elle n'est donc pas réticulable.

En particulier, la composition polymère ne comprend pas d'agents de réticulation, d'agents de couplage de type silane, de peroxydes et/ou d'additifs qui permettent une réticulation. En effet de tels agents dégradent le matériau polymère thermoplastique à base de polypropylène.

La composition polymère est de préférence recyclable.

La composition polymère peut être préparée en mélangeant le matériau polymère thermoplastique à base de polypropylène avec au moins une charge inorganique telle que définie dans l'invention, éventuellement un liquide diélectrique et éventuellement un ou plusieurs additifs.

La couche électriquement isolante du câble de l'invention est une couche non réticulée ou en d'autres termes une couche thermoplastique.

Dans l'invention, l'expression « couche non réticulée » ou « couche thermoplastique » signifie une couche dont le taux de gel selon la norme ASTM D2765-01 (extraction au xylène) est d'au plus 20%, de préférence d'au plus 10%, de préférence d'au plus 5%, et de façon particulièrement préférée de 0%.

Dans un mode de réalisation de l'invention, la couche électriquement isolante non réticulée présente une conductivité thermique d'au moins 0,235 W/m.K à 40°C, de préférence d'au moins 0,240 W/m.K à 40°C, de préférence encore d'au moins 0,250 W/m.K à 40°C, de préférence encore d'au moins 0,280 W/m.K à 40°C, de préférence encore d'au moins 0,300 W/m.K à 40°C, et de préférence encore d'au moins 0,320 W/m.K à 40°C.

La conductivité thermique est de préférence mesurée selon la méthode bien connue sous l'anglicisme « Transient Plane Source ou TPS ». De manière avantageuse, la conductivité thermique est mesurée à l'aide d'un appareil commercialisé sous la référence HOT DISK TPS 2500S par la société THERMOCONCEPT.

Dans un mode de réalisation particulier, la couche électriquement isolante non réticulée présente une résistance à la traction (RT) d'au moins 8,5 MPa, notamment avant ou après vieillissement (selon la norme CEI 20-86).

Dans un mode de réalisation particulier, la couche électriquement isolante non réticulée présente une élongation à la rupture (ER) d'au moins 350%, notamment avant ou après vieillissement (selon la norme CEI 20-86).

La résistance à la traction (RT) et l'élongation à la rupture (ER) (avant ou après vieillissement) peuvent être effectués selon la Norme NF EN 60811-1-1, notamment à l'aide d'un appareil commercialisé sous la référence 3345 par la société Instron.

La couche électriquement isolante du câble de l'invention est de préférence une couche recyclable.

La couche électriquement isolante de l'invention peut être une couche extrudée, notamment par des procédés bien connus de l'homme du métier.

La couche électriquement isolante présente une épaisseur variable en fonction du type de câble envisagé. En particulier, lorsque le câble conforme à l'invention est un câble à moyenne tension, l'épaisseur de la couche isolante est typiquement de 4 à 5,5 mm environ, et plus particulièrement de 4,5 mm environ. Lorsque le câble conforme à l'invention est un câble haute tension, l'épaisseur de la couche isolante varie typiquement de 17 à 18 mm (pour des tensions de l'ordre 150 kV environ) et pour aller jusqu'à des épaisseurs allant de 20 à 25 mm environ pour des tensions supérieures à 150 kV (câbles à très haute tension). Les épaisseurs précitées dépendent de la taille de l'élément électriquement conducteur allongé.

Dans la présente invention, on entend par « couche électriquement isolante » une couche dont la conductivité électrique peut être d'au plus 1.10⁻⁹ S/m, et de préférence d'au plus 1.10⁻¹⁰ S/m (siemens par mètre) (à 25°C environ).

Le câble de l'invention concerne plus particulièrement le domaine des câbles électriques fonctionnant en courant continu (DC) ou en courant alternatif (AC).

La couche électriquement isolante de l'invention entoure l'élément électriquement conducteur allongé.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, ou en une de leurs combinaisons.

Selon une forme de réalisation préférée de l'invention, le câble électrique peut comprendre :
- une première couche semi-conductrice entourant l'élément électriquement conducteur allongé,
- une couche électriquement isolante entourant la première couche semi-conductrice, ladite couche électriquement isolante étant telle que définie dans l'invention, et
- une deuxième couche semi-conductrice entourant la couche électriquement isolante.

Dans la présente invention, on entend par « couche semi-conductrice » une couche dont la conductivité électrique peut être d'au moins 1.10⁻⁹ S/m (siemens par mètre), de préférence d'au moins 1.10⁻³ S/m, et de préférence peut être inférieure à 1.10³ S/m (à 25°C).

Dans un mode de réalisation particulier, la première couche semi-conductrice, la couche électriquement isolante et la deuxième couche semi-conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

La première et la deuxième couches semi-conductrices sont de préférence en un matériau polymère thermoplastique.

Le câble peut comprendre en outre une gaine électriquement isolante entourant la deuxième couche semi-conductrice, et peut être en contact physique direct avec celle-ci.

Le câble électrique peut comprendre en outre un écran électrique (e.g. métallique) entourant la deuxième couche semi-conductrice. Dans ce cas, la gaine électriquement isolante entoure ledit écran électrique et l'écran électrique est entre la gaine électriquement isolante et la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

L'invention a pour deuxième objet un câble électrique comprenant au moins un élément électriquement conducteur allongé et au moins une couche électriquement isolante non réticulée obtenue à partir d'une composition polymère comprenant au moins un matériau polymère thermoplastique à base de polypropylène et au moins une charge inorganique, caractérisé en ce que la couche électriquement isolante non réticulée présente une conductivité thermique d'au moins 0,235 W/m.K à 40°C, de préférence d'au moins 0,240 W/m.K à 40°C, de préférence encore d'au moins 0,250 W/m.K à 40°C, de préférence encore d'au moins 0,280 W/m.K à 40°C, de préférence encore d'au moins 0,300 W/m.K à 40°C, et de préférence encore d'au moins 0,320 W/m.K à 40°C.

La conductivité thermique est de préférence mesurée selon la méthode bien connue sous l'anglicisme « Transient Plane Source ou TPS ». De manière avantageuse, la conductivité thermique est mesurée à l'aide d'un appareil commercialisé sous la référence HOT DISK TPS 2500S par la société THERMOCONCEPT.

L'élément électriquement conducteur allongé, la couche électriquement isolante non réticulée, la composition polymère, le matériau polymère thermoplastique à base de polypropylène et la charge inorganique sont tels que définis dans le premier objet de l'invention.

L'invention a pour troisième objet un procédé de fabrication d'un câble électrique conforme au premier objet ou deuxième objet de l'invention, caractérisé en ce qu'il comprend au moins une étape 1) d'extrusion de la composition polymère telle que définie dans le premier objet de l'invention autour d'un élément électriquement conducteur allongé, pour obtenir une couche électriquement isolante (extrudée) entourant ledit élément électriquement conducteur allongé.

L'étape 1) peut être réalisée par des techniques bien connues de l'homme du métier, par exemple à l'aide d'une extrudeuse.

Lors de l'étape 1), la composition en sortie d'extrudeuse est dite « non réticulée », la température ainsi que le temps de mise en oeuvre au sein de l'extrudeuse étant optimisés en conséquence.

En sortie d'extrudeuse, on obtient donc une couche extrudée autour dudit élément électriquement conducteur, pouvant être ou non, directement en contact physique avec ledit élément électriquement conducteur allongé.

Le procédé ne comprend pas de préférence d'étape de réticulation de la couche obtenue à l'étape 1).

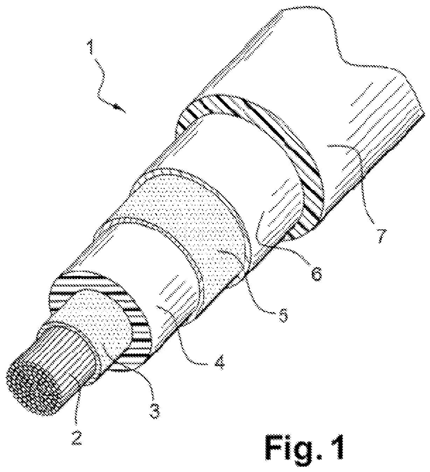

La figure 1 représente une vue schématique d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble électrique 1 à moyenne ou haute tension conforme au premier objet de l'invention, illustré dans la figure 1, comprend un élément électriquement conducteur 2 allongé central, notamment en cuivre ou en aluminium. Le câble électrique 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée non réticulée, obtenue à partir de la composition polymère telle que définie dans l'invention.

Les couches semi-conductrices 3 et 5 sont des couches extrudées thermoplastiques (i.e. non réticulées).

La présence de l'écran métallique 6 et de la gaine extérieure de protection 7 est préférentielle, mais non essentielle, cette structure de câble étant en tant que telle bien connue de l'homme du métier.

### EXEMPLES

### 1. Compositions polymères

Des compositions **I1, I2** et **I3** conformes à l'invention, i.e. comprenant au moins un matériau polymère thermoplastique à base de polypropylène et au moins de la craie en tant que charge inorganique, ont été comparées à des compositions **C1** et **C2** comparatives, la composition **C2** correspondant à une composition pour former une couche de XLPE et la composition **C1** correspondant à une composition comprenant un matériau polymère thermoplastique à base de polypropylène identique à celui utilisé pour les compositions de l'invention **I1, I2** et **I3** (**C1** ne comprenait donc pas de charge inorganique telle que définie dans l'invention).

Le tableau 1 ci-dessous rassemble des compositions polymères dont les quantités des composés sont exprimées en pourcentages en masse, par rapport à la masse totale de la composition polymère.

**TABLEAU 1**

| **Compositions polymères** | **C1 (*)** | **C2 (*)** | **I1** | **I2** | **I3** |
|---|---|---|---|---|---|
| Polyéthylène de faible densité | 0 | 98,1 | 0 | 0 | 0 |
| Copolymère de propylène hétérophasé | 100 | 0 | 100 | 100 | 100 |
| peroxyde | 0 | 1,6 | 0 | 0 | 0 |
| Liquide diélectrique | 6 | 0 | 6 | 6 | 6 |
| Charge inorganique : craie | 0 | 0 | 11,8 | 26,6 | 45,6 |
| antioxydant | 0,3 | 0,3 | 0,3 | 0,3 | 0,3 |

| | | | | | |
|---|---|---|---|---|---|
| (*) Compositions comparatives ne faisant pas partie de l'invention | | | | | |

L'origine des composés du tableau 1 est la suivante :
- polyéthylène linéaire de faible densité commercialisé par la société Ineos sous la référence BPD2000 ;
- copolymère hétérophasé commercialisé par la société Basell Polyolefins sous la référence Adflex^{®} Q 200F ;
- liquide diélectrique comprenant 5,7% en masse environ d'une huile minérale commercialisée par la société Nynas sous la référence Nytex 810 ; et 0,3% en masse environ de benzophénone commercialisée par la société Sigma-Aldrich sous la référence B9300 ;
- antioxydant commercialisé par la société Ciba sous la référence Irganox B 225 qui comprend un mélange équimolaire d'Irgafos 168 et d'Irganox 1010 (pour **C1, I1** et **I2**) ou commercialisé par la société BASF sous la référence Irgastab kV10 (pour **C2**) ; et
- charge inorganique (craie) commercialisée sous la référence Omya EXH1 pour la craie.

### 2. Préparation des couches non réticulées

Les compositions rassemblées dans le tableau 1 sont mises en oeuvre comme suit. Pour les compositions **C1, I1, I2** et **I3,** le liquide diélectrique et l'antioxydant ont été mélangés sous agitation à 75°C environ, afin de former un liquide diélectrique. Le liquide diélectrique a ensuite été mélangé avec le copolymère hétérophasé dans un récipient, puis le mélange résultant et la charge inorganique ont été mélangés à l'aide d'une extrudeuse à double vis (« Berstorff twin screw extruder ») à une température de 145 à 180°C environ, puis fondus à 200°C environ (vitesse des vis : 80 tours/min). Le mélange résultant homogénéisé et fondu a été ensuite refroidi et mis sous la forme de granulés. Les granulés ont ensuite été pressés à chaud pour former des couches sous la forme de plaques.

On a ainsi préparé chacune des compositions polymères **C1, C2, I1, I2** et **I3** sous la forme de couches de 1 mm d'épaisseur pour l'évaluation de leurs propriétés mécaniques et également de couches de 8 mm d'épaisseur pour effectuer les mesures de conductivité thermique.

Ces compositions **C1, C2, I1, I2** et **I3** ont ensuite été comparées du point de vue de leurs propriétés mécaniques (résistance à la traction/élongation à la rupture avant et après vieillissement à 135°C pendant 240 heures) et de leur conductivité thermique.

Les tests de résistance à la traction (RT) et d'élongation à la rupture (ER) ont été effectués sur les matériaux selon la Norme NF EN 60811-1-1, à l'aide d'un appareil commercialisé sous la référence 3345 par la société Instron.

Les résultats correspondant à chacun de ces tests sont reportés dans le tableau 2 (propriétés mécaniques) ci-dessous :

**TABLEAU 2**

| **Propriétés** | **C1 (*)** | **C2 (*)** | **I1** | **I2** | **I3** |
|---|---|---|---|---|---|
| RT (MPa) | 17,1 | 23,4 | 18,6 | 17,5 | 14,9 |
| ER (%) | 777 | 501,5 | 715 | 683 | 648 |
| RT après vieillissement (MPa) | 18,4 | 23,7 | 19,1 | 16,4 | 12,9 |
| ER après vieillissement (%) | 677 | 522,5 | 664 | 634 | 586 |

| | | | | | |
|---|---|---|---|---|---|
| (*) Compositions comparatives ne faisant pas partie de l'invention | | | | | |

L'ensemble de ces résultats montre que l'incorporation d'une charge inorganique telle que définie dans l'invention dans une matrice de polypropylène n'est pas préjudiciable aux propriétés mécaniques du matériau polymère thermoplastique utilisable conformément à l'invention à titre de couche électriquement isolante d'un câble d'énergie moyenne tension ou haute tension, celui-ci conservant de très bonnes propriétés mécaniques en termes de résistance à la traction et d'élongation à la rupture, y compris après vieillissement (Tableau 2).

Les tests de conductivité thermique ont été effectués sur les matériaux selon la méthode bien connue sous l'anglicisme « Transient Plane Source ou TPS » et à l'aide d'un appareil commercialisé sous la référence HOT DISK TPS 2500S par la société THERMOCONCEPT.

Les résultats correspondant à ces tests sont reportés dans le tableau 3 (conductivité thermique) ci-dessous :

**TABLEAU 3**

| **Propriétés** | **C1 (*)** | **I1** | **I2** | **I3** |
|---|---|---|---|---|
| Conductivité à 40°C (W/m.K) | 0,229 | 0,243 | 0,263 | 0,305 |

| | | | | |
|---|---|---|---|---|
| (*) Composition comparative ne faisant pas partie de l'invention | | | | |

Les résultats de conductivité thermique montrent que la présence d'une charge inorganique telle que définie dans l'invention dans une matrice de polypropylène conduit à une couche électriquement isolante ayant une conductivité thermique supérieure à celle d'une couche électriquement isolante dans laquelle il n'y a pas de charge inorganique.

## Revendications

1. Câble électrique comprenant au moins un élément électriquement conducteur allongé et au moins une couche électriquement isolante non réticulée obtenue à partir d'une composition polymère comprenant au moins un matériau polymère thermoplastique à base de polypropylène et au moins une charge inorganique, **caractérisé en ce que** la charge inorganique est choisie parmi les carbonates et **en ce que** le matériau polymère thermoplastique à base de polypropylène comprend un copolymère de propylène hétérophasé en tant que copolymère de propylène P₁.

2. Câble selon la revendication 1 **caractérisé en ce que** les carbonates sont choisis parmi la craie, le carbonate de calcium, le carbonate de magnésium, le calcaire et tout autre minéral comprenant majoritairement du carbonate de calcium ou de magnésium.

3. Câble selon l'une quelconque des revendications précédentes, **caractérisé en ce que** la charge inorganique représente de 2% à 40% en masse, par rapport à la masse totale de la composition polymère.

4. Câble selon l'une quelconque des revendications précédentes, **caractérisé en ce que** la charge inorganique est la craie.

5. Câble selon l'une quelconque des revendications précédentes, **caractérisé en ce que** le copolymère hétérophasé comprend une phase thermoplastique de type propylène et une phase élastomère thermoplastique de type copolymère d'éthylène et d'une oléfine α₂.

6. Câble selon l'une quelconque des revendications précédentes, **caractérisé en ce que** le matériau polymère thermoplastique à base de polypropylène comprend un copolymère statistique de propylène et un copolymère de propylène hétérophasé, en tant que copolymères de propylène P₁.

7. Câble selon l'une quelconque des revendications précédentes, **caractérisé en ce que** le ou les copolymère(s) de propylène P₁ représente(nt) au moins 50% en masse, par rapport à la masse totale du matériau polymère thermoplastique à base de polypropylène.

8. Câble selon l'une quelconque des revendications précédentes, **caractérisé en ce que** le matériau polymère thermoplastique à base de polypropylène comprend en outre un homopolymère ou un copolymère d'oléfine P₂, l'oléfine étant choisie parmi l'éthylène et une oléfine α₃.

9. Câble selon la revendication 8, **caractérisé en ce que** l'homopolymère ou le copolymère d'oléfine P₂ est un polyéthylène basse densité.

10. Câble selon la revendication 8 ou 9, **caractérisé en ce que** l'homopolymère ou copolymère d'oléfine P₂ représente de 10 à 50% en masse, par rapport à la masse totale du matériau polymère thermoplastique à base de polypropylène.

11. Câble selon l'une quelconque des revendications précédentes, **caractérisé en ce que** la composition polymère de l'invention comprend en outre un liquide diélectrique.

12. Câble selon la revendication 11, **caractérisé en ce que** le liquide diélectrique comprend une huile minérale et au moins un composé polaire de type benzophénone, acétophénone ou un de leurs dérivés.

13. Procédé de fabrication d'un câble électrique tel que défini à l'une quelconque des revendications précédentes, **caractérisé en ce qu'**il comprend au moins une étape 1) d'extrusion de la composition polymère autour d'un élément électriquement conducteur allongé, pour obtenir une couche électriquement isolante entourant ledit élément électriquement conducteur allongé.

## Patentansprüche

1. Elektrisches Kabel, umfassend mindestens ein verlängertes elektrisch leitendes Element und mindestens eine nicht vernetzte elektrisch isolierende Schicht, erhalten aus einer Polymerzusammensetzung, die mindestens ein thermoplastisches Polymermaterial auf der Grundlage von Polypropylen und mindestens einen anorganischen Füllstoff umfasst, **dadurch gekennzeichnet, dass** der anorganische Füllstoff ausgewählt ist aus Carbonaten, und dadurch, dass das thermoplastische Polymermaterial auf der Grundlage von Polypropylen ein heterophasisches Propylencopolymer als Propylencopolymer P₁ umfasst.

2. Kabel nach Anspruch 1, **dadurch gekennzeichnet, dass** die Carbonate ausgewählt sind aus Kreide, Calciumcarbonat, Magnesiumcarbonat, Kalk oder jedem anderen Material, das hauptsächlich Calcium- oder Magnesiumcarbonat umfasst.

3. Kabel nach einem der vorhergehenden Ansprüche, **dadurch gekennzeichnet, dass** der anorganische Füllstoff 2 bis 40 Massenprozent mit Bezug auf die Gesamtmasse der Polymerzusammensetzung umfasst.

4. Kabel nach einem der vorhergehenden Ansprüche, **dadurch gekennzeichnet, dass** der anorganische Füllstoff Kreide ist.

5. Kabel nach einem der vorhergehenden Ansprüche, **dadurch gekennzeichnet, dass** das heterophasische Copolymer eine thermoplastische Phase vom Typ Propylen und eine elastomere thermoplastische Phase vom Typ Ethylencopolymer und ein α₂-Olefin umfasst.

6. Kabel nach einem der vorhergehenden Ansprüche, **dadurch gekennzeichnet, dass** das thermoplastische Polymermaterial auf der Grundlage von Polypropylen ein statisches Propylencopolymer und ein heterophasisches Propylencopolymer als Propylencopolymere P₁ umfasst.

7. Kabel nach einem der vorhergehenden Ansprüche, **dadurch gekennzeichnet, dass** das oder die Propylencopolymere P₁ mindestens 50 Massenprozentmit Bezug auf die Gesamtmasse des thermoplastischen Polymermaterials auf der Grundlage von Polypropylen darstellt/darstellen.

8. Kabel nach einem der vorhergehenden Ansprüche, **dadurch gekennzeichnet, dass** das thermoplastische Polymermaterial auf der Grundlage von Polypropylen außerdem ein Olefinhomopolymer oder -copolymer P₂ umfasst, wobei das Olefin ausgewählt ist aus Ethylen und einem α₃-Olefin.

9. Kabel nach Anspruch 8, **dadurch gekennzeichnet, dass** das Homopolymer oder das Olefincopolymer P₂ ein Polyethylen mit niedriger Dichte ist.

10. Kabel nach Anspruch 8 oder 9, **dadurch gekennzeichnet, dass** das Homopolymer oder Olefincopolymer P₂ von 10 bis 50 Massenprozent mit Bezug auf die Gesamtmasse des thermoplastischen Polymermaterials auf der Grundlage von Polypropylen darstellt.

11. Kabel nach einem der vorhergehenden Ansprüche, **dadurch gekennzeichnet, dass** die Polymerzusammensetzung der Erfindung außerdem eine dielektrische Flüssigkeit umfasst.

12. Kabel nach Anspruch 11, **dadurch gekennzeichnet, dass** die dielektrische Flüssigkeit ein Mineralöl und mindestens eine polare Verbindung vom Typ Benzophenon, Acetophenon oder eines ihrer Derivate umfasst.

13. Verfahren zur Herstellung eines elektrischen Kabels wie in einem der vorhergehenden Ansprüche definiert, **dadurch gekennzeichnet, dass** es mindestens einen Schritt 1) des Extrudierens der Polymerzusammensetzung um ein längliches elektrisch leitendes Element umfasst, um eine elektrisch isolierende Schicht zu erhalten, die das längliche elektrisch leitende Element umgibt.

## Claims

1. An electric cable comprising at least one elongated electrically conducting element and at least one non-crosslinked electrically insulating layer obtained from a polymer composition comprising at least one polypropylene-based thermoplastic polymer material and at least one inorganic filler, **characterized in that** the inorganic filler is chosen from carbonates and **in that** the polypropylene-based thermoplastic copolymer comprises a heterophasic propylene copolymer as P₁ propylene copolymer.

2. The cable according to claim 1, **characterized in that** the carbonates are chosen from chalk, calcium carbonate, magnesium carbonate, limestone and any other material comprising predominantly calcium carbonate or magnesium carbonate.

3. The cable according to any one of the preceding claims, **characterized in that** the inorganic filler represents from 2% to 40% by weight, relative to the total weight of the polymer composition.

4. The cable according to any one of the preceding claims, **characterized in that** the inorganic filler is chalk.

5. The cable according to any one of the preceding claims, **characterized in that** the heterophasic copolymer comprises a thermoplastic phase of propylene type and a thermoplastic elastomer phase of ethylene and α₂ olefin copolymer type.

6. The cable according to any one of the preceding claims, **characterized in that** the polypropylene-based thermoplastic polymer material comprises a random propylene copolymer and a heterophasic propylene copolymer as P₁ propylene copolymers.

7. The cable according to any one of the preceding claims, **characterized in that** the P₁ propylene copolymer(s) represent(s) at least 50% by weight relative to the total weight of the polypropylene-based thermoplastic polymer material.

8. The cable according to any one of the preceding claims, **characterized in that** the polypropylene-based thermoplastic polymer further comprises a P₂ olefin homopolymer or copolymer, the olefin being chosen from ethylene and an α₃ olefin.

9. The cable according to claim 8, **characterized in that** the P₂ olefin homopolymer or copolymer is a low-density polyethylene.

10. The cable according to claim 8 or 9, **characterized in that** the P₂ olefin homopolymer or copolymer represents from 10% to 50% by weight relative to the total weight of the polypropylene-based thermoplastic polymer material.

11. The cable according to any one of the preceding claims, **characterized in that** the polymer composition of the invention further comprises a dielectric liquid.

12. The cable according to claim 11, **characterized in that** the dielectric liquid comprises a mineral oil and at least one polar compound of the benzophenone type, acetophenone type, or a derivative thereof.

13. A method for manufacturing an electric cable as defined in any one of the preceding claims, **characterized in that** it comprises at least one step 1) of extruding the polymer composition around an elongated electrically conducting element, so as to obtain an electrically insulating layer surrounding said elongated electrically conducting element.
